(19) Europäisches Patentamt
European Patent Office
Office européen des brevets

(11) **EP 3 260 379 B1**

(12) **EUROPÄISCHE PATENTSCHRIFT**

(45) Veröffentlichungstag und Bekanntmachung des Hinweises auf die Patenterteilung:
**31.07.2024   Patentblatt 2024/31**

(21) Anmeldenummer: **17176823.7**

(22) Anmeldetag: **20.06.2017**

(51) Internationale Patentklassifikation (IPC):
**B64G 1/46** *(2006.01)*      **H02N 11/00** *(2006.01)*

(52) Gemeinsame Patentklassifikation (CPC):
**H02N 15/00; B64G 1/46**

(54) **SIMULATION VON SCHWERKRAFT UND VORRICHTUNG ZUM ERZEUGEN EINER AUF EIN OBJEKT WIRKENDEN KRAFT**

SIMULATION OF GRAVITY AND DEVICE FOR CREATING A FORCE ACTING ON AN OBJECT

SIMULATION DE FORCE DE GRAVITÉ ET DISPOSITIF DE PRODUCTION D'UNE FORCE AGISSANT SUR UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2016   DE 102016111346**

(43) Veröffentlichungstag der Anmeldung:
**27.12.2017   Patentblatt 2017/52**

(73) Patentinhaber: **Airbus Defence and Space GmbH 82024 Taufkirchen (DE)**

(72) Erfinder:
  • **Orlando, Giovanni**
    **28199 Bremen (DE)**
  • **Coste, Jean-Dominique**
    **28199 Bremen (DE)**

(74) Vertreter: **Marschall, Stefan**
    **Elbpatent**
    **Marschall & Partner**
    **Patent und Rechtsanwaltskanzlei mbB**
    **Bavariaring 26**
    **80336 München (DE)**

(56) Entgegenhaltungen:
EP-A1- 1 079 399        WO-A1-2007/082324
DE-A1- 19 832 001       US-A- 6 159 271
US-A1- 2016 065 098     US-B2- 8 204 563

• BERRY M V ET AL: "OF FLYING FROGS AND LEVITRONS", EUROPEAN JOURNAL OF PHYSICS, INSTITUTE OF PHYSICS PUBLISHING, BRISTOL, GB, vol. 18, no. 4, 1 July 1997 (1997-07-01), pages 307 - 313, XP000700340, ISSN: 0143-0807, DOI: 10.1088/0143-0807/18/4/012
• VALLES J M ET AL: "Magnetic levitation-based Martian and Lunar gravity simulator", ADVANCES IN SPACE RESEARCH, ELSEVIER, AMSTERDAM, NL, vol. 36, no. 1, 1 January 2005 (2005-01-01), pages 114 - 118, XP027796768, ISSN: 0273-1177, [retrieved on 20050101]
• JR MINKEL: "Artificial Gravity with Magnetism", SCIENTIFIC AMERICAN., vol. 294, no. 5, 1 May 2006 (2006-05-01), US, pages 29 - 29, XP055600689, ISSN: 0036-8733, DOI: 10.1038/scientificamerican0506-29a

**Beschreibung**

Die Erfindung betrifft einen Tank eines Weltraumfahrzeugs, der eine Vorrichtung zum Erzeugen einer auf einen im Tank enthaltenen Treibstoff wirkenden Kraft umfasst.

Das künstliche Erzeugen einer kontaktfrei auf ein Objekt wirkenden Kraft ist für vielfältige Anwendungsgebiete von Interesse. Insbesondere ist das Fehlen der Erdanziehungskraft im Weltall bei einer Vielzahl von Operationen problematisch. Ein Simulieren der Schwerkraft ist derzeit nur sehr eingeschränkt bzw. mit großem Aufwand möglich, insbesondere durch Erzeugen einer Rotation und Ausnutzen der daraus resultierenden Zentrifugalkraft.

Die vorliegende Erfindung hat insbesondere die Aufgabe, eine alternative Technik zu entwickeln, mit der eine auf einen Treibstoff in einem Tank wirkende Erdanziehungskraft im Weltall simuliert werden kann.

Eine mit einer solchen Technik generierte Kraft kann umgekehrt bei Anwendung auf der Erde vorzugsweise der Schwerkraft entgegen gerichtet werden. So kann ein Objekt beispielsweise zum Schweben gebracht und/oder reibungsfrei oder zumindest reibungsarm beschleunigt werden.

Zum Bewirken eines derartigen Schwebens auf der Erde ist es unter anderem bekannt (siehe z.B. M.V. Berry und A.K. Geim: "Of flying frogs and levitrons" in Eur. J. Phys. 18 (1997), Seiten 307 - 313), Magnetfelder auszunutzen, und zwar auch im Falle von nicht ferromagnetischen Objekten: So kann insbesondere für diamagnetische Objekte innerhalb entsprechender Magnetfelder die Schwerkraft kompensiert werden und die Objekte damit zum Schweben gebracht werden. Die hierzu herkömmlich verwendeten Vorrichtungen sind jedoch in der Anwendung wenig flexibel insbesondere in Bezug auf eine Bandbreite verschiedener oder sogar verschiedenartiger Objekte, die damit zum Schweben gebracht werden können. Die EP1079399 nennt eine Vorrichtung zum Erzeugen einer Magnetkraft auf ein Objekt mit mehreren Haupt- und Nebenmagneten, die zueinander relativ beweglich sind.

Die oben genannte Aufgabe wird gelöst durch einen Tank gemäß Anspruch 1. Vorteilhafte Ausführungsformen sind in den Unteransprüchen, den Figuren und der Beschreibung offenbart.

Ein erfindungsgemäßer Tank eines Weltraumfahrzeugs umfasst eine Vorrichtung gemäß einer der in dieser Schrift offenbarten Ausführungsformen zum Bewirken einer Kraft, die auf einen im Tank enthaltenen (insbesondere diamagnetischen) Treibstoff wirkt; im Sinne der obigen und im Folgenden verwendeten Bezeichnungen stellt dabei also der Treibstoff das Objekt dar.

Wie weiter unten dargelegt ist, umfasst die besagte Vorrichtung eine Magneteinrichtung. Vorzugsweise ist die Magneteinrichtung dabei so ausgerichtet, dass die genannte Kraft in Richtung eines Tankausgangs wirkt. Die Vorrichtung bzw. die Magneteinrichtung kann dabei ganz oder teilweise im Inneren des Tankraumes oder außerhalb desselben angeordnet sein.

Das Simulieren einer auf ein Objekt wirkenden Schwerkraft im Weltall kann mit einem Verfahren erfolgen, das ein Induzieren eines magnetischen Moments in dem Objekt mittels eines (im Weltall durchgeführten) Generierens eines äußeren Magnetfelds in einer Umgebung des Objekts umfasst. Das Objekt kann dabei diamagnetisch oder paramagnetisch sein. Es befindet sich vorzugsweise in einer vorgesehenen Position.

Bei einem solchen Verfahren wird somit die aus dem induzierten magnetischen Moment resultierende Kraft zum Simulieren der Schwerkraft verwendet. Dadurch kann das Objekt auch im Weltall auf einfache Weise beispielsweise fixiert oder in eine vorgesehene Richtung bewegt werden, oder das Objekt kann, wenn es ein Lebewesen ist, biologische Prozesse (z.B. Wachstum) unter erdähnlichen Bedingungen umsetzen.

Wie sich zeigen lässt, kann das in dem Objekt in einem Punkt $(x,y,z)$ induzierte magnetische Moment $m(x,y,z)$ aus dem generierten Magnetfeld (bzw. seiner magnetischen Flussdichte) $\vec{B}(x,y,z)$, ferner der magnetischen Suszeptibilität $\chi$ des Objekts, dessen Volumen $V$ und der magnetischen Feldkonstante (bzw. der magnetischen Permeabilität des Vakuums) $\mu_0$ bestimmt werden.

Beispielsweise für diamagnetische Materialen (die eine magnetische Suszeptibilität $\chi < 0$ aufweisen) ergibt sich mit $\mathbf{B}(x,y,z) := |\vec{B}(x,y,z)|$ in der Schwerelosigkeit die Kraft

$$\boldsymbol{F} = \frac{\chi \cdot V}{\mu_0}\,\mathbf{B}\nabla\mathbf{B}.$$

Ist das Magnetfeld mindestens in einem Teilbereich (im Wesentlichen) homogen bzw. rotationssymmetrisch, so ist die Kraft $\boldsymbol{F}$ parallel zur Symmetrieachse des Magnetfeldes gerichtet. Bei geeignet gewähltem Koordinatensystem, dessen eine Achse (die hier als z-Koordinate bezeichnet wird) entlang dieser Symmetrieachse verläuft, ist entlang dieser Achse die entsprechende z-Komponente von $\boldsymbol{F}$ gegeben durch die Gleichung

$$F(z) = \frac{\chi \cdot V}{\mu_0} B(z)B'(z);$$

dabei ist *z* ein Punkt auf der Symmetrieachse des Magnetfeldes, $B(z) := |\vec{B}(0,0,z)| = \mathbf{B}(0,0,z)$ ist die Stärke des Magnetfelds in *z*, *B'*(*z*) die zugehörige Ableitung und V das Volumen des Objekts. Die Beschleunigung *a* bestimmt sich daraus zu

$$a = \frac{\chi}{\rho\mu_0} B(z)B'(z),$$

wobei $\rho$ die Dichte des Objekts bezeichnet; für weitere Einzelheiten sei auf den oben genannten Artikel von M.V. Berry und A.K. Geim verwiesen.

Gemäß einer beispielhaften Anwendung, die nicht unter den Schutzbereich der Ansprüche fällt, umfasst das Verfahren ein Festlegen eines Wertes (bzw. Betrags) oder eines Wertebereichs für eine zu simulierende, auf das (diamagnetische oder nichtdiamagnetische) Objekt wirkende Schwerkraft (bzw. ein Festlegen eines angestrebten Wertes oder Wertebereichs für eine Beschleunigung *a*). Vorzugsweise umfasst das Verfahren darüber hinaus ein Bestimmen mindestens eines das äußere Magnetfeld beeinflussenden Parameterwertes, mit dem der festgelegte Wert bzw. Wertebereich bewirkt werden kann, und ein Kontrollieren des mindestens einen Parameterwertes.

So kann eine für einen speziellen Fall vorgesehene bzw. geeignete simulierte Schwerkraft realisiert werden. Insbesondere kann ein jeweils geeigneter Wert bzw. Wertebereich für die simulierte Erdbeschleunigung gewählt und realisiert werden.

Der mindestens eine Parameterwert kann beispielsweise eine Position und/oder einen Abstand von Elementen in einer Magneteinrichtung festlegen, die zum Generieren des äußeren Magnetfeldes verwendet werden kann, und/oder - sofern eine verwendete Magneteinrichtung einen Elektromagneten umfasst - eine anzulegende Spannung.

Das Bestimmen des mindestens einen Parameterwertes erfolgt vorzugsweise objektspezifisch unter Berücksichtigung des Volumens V und/oder Materials des (jeweiligen) Objekts (z.B. der Dichte $\rho$ seines Materials und/oder seiner magnetischen Suszeptibilität $\chi$). Der mindestens eine Parameterwert beeinflusst dabei vorzugsweise das Magnetfeld und damit das Produkt $\mathbf{B}\nabla\mathbf{B}$ bzw. (im Falle eines homogenen bzw. rotationssymmetrischen Magnetfelds) das Produkt *B*(*z*)*B'*(*z*). Er wird vorteilhafterweise so bestimmt, dass die Kraft (beispielsweise in den obigen Formeln das Produkt $\frac{\chi \cdot V}{\mu_0} \mathbf{B}\nabla\mathbf{B}$ bzw. $\frac{\chi \cdot V}{\mu_0} B(z)B'(z)$ bzw. die sich daraus jeweils ergebende Beschleunigung den festgelegten Wert bzw. Wertebereich annimmt.

Insbesondere kann ein Ausdehnungsbereich innerhalb des äußeren Magnetfeldes bestimmt werden, in dem dann ein festgelegter minimaler Wert (als untere Schranke eines festgelegten Wertebereichs) der simulierten Schwerkraft verwirklicht werden kann: So kann beispielsweise mit der obigen Formel ein Variablenbereich für *z* festgelegt werden, in dem der festgelegte Wertebereich erreicht wird.

Mittels des Kontrollierens des mindestens einen Parameterwertes wird sichergestellt, dass der mindestens eine Parameter an einer für das Generieren des äußeren Magnetfeldes verwendeten Magneteinrichtung so eingestellt ist, dass der festgelegte Wert bzw. Wertebereich für die simulierte Schwerkraft erreicht wird. Das Kontrollieren kann ein Vergleichen mit mindestens einem (z.B. für ein anderes Objekt oder ein en anderen festgelegten Wert bzw. Wertebereich) eingestellten Parameterwert umfassen. Weicht dieser mindestens eine eingestellte von dem jeweiligen (mindestens einen) bestimmten Parameterwert ab, kann vorzugsweise eine jeweilige Einstellung geändert werden.

So kann das Verfahren ein Simulieren von Schwerkraft unterschiedlicher Stärke und/oder für verschiedene (diamagnetische oder nicht diamagnetische) Objekte ermöglichen.

Gemäß einer Abwandlung des beispielhaft dargestellten Verfahrens ist das Objekt ein in einem Tank enthaltener Treibstoff und wird die Schwerkraft in Richtung eines Tankausgangs simuliert. Insbesondere wird gemäß einer Variation des Verfahrens das äußere Magnetfeld mittels einer Vorrichtung gemäß einer in dieser Schrift offenbarten Ausführungsform generiert, wie sie von einem erfindungsgemäßen Tank umfasst ist:
Eine solche Vorrichtung dient einem Erzeugen von auf ein Objekt wirkender Kraft (z.B. einer simulierten Schwerkraft des Objekts im Weltall). Die Vorrichtung umfasst eine Magneteinrichtung, die mindestens zwei relativ zueinander bewegliche Elemente aufweist und dazu eingerichtet ist, ein äußeres (d.h. in einer Umgebung des Objektes liegendes) Magnetfeld zu generieren und damit im Objekt ein magnetisches Moment zu induzieren; dieses Moment bedingt dabei die auf das Objekt wirkende Kraft. Mittels einer geeigneten Positionierung der Elemente relativ zueinander kann das äußere Magnetfeld vorzugsweise manipuliert werden, beispielsweise hinsichtlich seiner Stärke und/oder Richtung. Insbesondere kann durch eine entsprechende Positionierung vorzugsweise ein Verlauf der das Magnetfeld beschreibenden Feldlinien beeinflusst werden und/oder mindestens ein Parameterwert wie oben dargelegt beeinflusst werden. Bevorzugt ist eine Ausführungsform, bei der das generierte Magnetfeld mindestens in einem Teilbereich (im Wesentlichen) rotationssymmetrisch bzw. homogen ausgebildet wird. Insbesondere vorteilhaft ist eine Ausführungsbeispiel, bei dem die mindestens zwei Elemente rotationssymmetrisch um dieselbe Achse ausgebildet und/oder symmetrisch zu mindestens einer Ebene angeordnet sind.

Die Vorrichtung erlaubt somit ein Bewirken eines im jeweiligen Fall geeigneten oder festgelegten Magnetfeldes, somit des im jeweiligen Objekt induzierten magnetischen Moments und damit der auf das Objekt wirkenden Kraft. Insbesondere kann mittels der Positionierung der Elemente (sowie ggf. weiterer Parameter, wie beispielsweise einer anzulegenden Spannung, falls die Magneteinrichtung einen Elektromagneten umfasst) die Funktion der magnetischen Flussdichte $(x,y,z) \mapsto \vec{B}(x,y,z)$ und damit auch das oben definierte Produkt

$$\mathbf{B}(x, y, z)\nabla\mathbf{B}(x, y, z)$$

bzw. $B(z)B'(z)$ beeinflusst werden. Physikalische Ergebnisse zeigen, dass dieses Produkt (neben objektspezifischen Eigenschaften wie Volumen, Abmessungen, Form, Dichte und magnetische Suszeptibilität des Objekts) die im jeweiligen Punkt $(x, y, z)$ in einem magnetischen Zentrum der Magneteinrichtung erzeugte Kraft bzw. - bei einem rotationssymmetrischen Magnetfeld - die im Punkt $z$ auf der Symmetrieachse erzeugte Kraft maßgeblich bestimmt; als "magnetisches Zentrum" wird dabei in dieser Schrift ein Bereich bezeichnet, in dem die Stärke des Magnetfelds maximal ist oder z.B. höchstens 15% oder höchstens 10%, bevorzugter höchstens 5% von ihrem Maximum abweicht. Bei Verwendung der Vorrichtung auf der Erde wird die Vorrichtung vorzugsweise so ausgerichtet, dass das magnetische Zentrum (bzw. eine Symmetrieachse) des generierten (vorzugsweise in mindestens einem Teilbereich rotationssymmetrischen bzw. homogenen) Magnetfeldes vertikal verläuft. Bei einer derartigen Verwendung auf der Erde, bei der das Objekt vorzugsweise diamagnetisch ist und die dann insbesondere ein Bewirken eines diamagnetischen Schwebens ermöglicht, müssen für eine Stabilität der erzeugten Kraft zudem die zweiten partiellen Ableitungen der magnetischen Flussdichte jeweils positiv sein; mit Hilfe einer geeigneten Positionierung der Elemente relativ zueinander kann vorzugsweise in einem geeigneten Bereich für $z$ (im magnetischen Zentrum, bzw. - sofern vorhanden - entlang einer Symmetrieachse des Magnetfeldes) auch diese Eigenschaft des erzeugten äußeren Magnetfeldes erzielt werden.

Somit bietet die beschriebene Vorrichtung einen flexiblen Anwendungsbereich zum Erzeugen einer auf ein jeweiliges Objekt wirkenden Kraft. Das Objekt kann vorzugsweise diamagnetisch oder paramagnetisch sein.

Die mindestens zwei (relativ zueinander beweglichen) Elemente umfassen vorzugsweise mindestens einen Magneten und/oder mindestens ein Abschirmelement zum Deformieren eines Magnetfeldes.

Die mindestens zwei Elemente können beispielsweise mindestens einen Permanentmagneten umfassen; diese sind besonders einfach zu handhaben und insbesondere in Fällen geeignet, in denen eine zu erzeugende Kraft relativ klein sein kann, beispielsweise für Objekte aus dem Bereich der Mikrofluidik und/oder bei einer Verwendung der Vorrichtung zum Simulieren einer Schwerkraft im Weltall.

Mindestens eines der relativ zueinander beweglichen Elemente kann eine stromdurchflossene Spule, also ein Elektromagnet sein. Derartige Magneten lassen sich besonders gut steuern.

Die mindestens zwei Elemente können mindestens einen supraleitenden Magneten umfassen; derartige supraleitende Magneten sind besonders geeignet für ein Erzeugen besonders starker Magnetfelder.

Alternativ oder zusätzlich können die mindestens zwei Elemente mindestens einen (z.B. wassergekühlten) Bittermagneten und/oder mindestens einen Hybridmagneten umfassen; mit ihnen können besonders große Werte für $|\mathbf{B}(x,y,z) \nabla\mathbf{B}(x,y,z)|$ bzw. für $|B(z)B'(z)|$ erreicht werden, sie eignen sich daher insbesondere für größere Objekte und/oder Objekte, die Kupfer, Siliziumkarbid, Kohlenstoff oder Stickstoffoxid umfassen können.

In einer Ausführungsvariante umfasst die Vorrichtung mindestens einen Quadrupolmagneten; diese Ausführungsform hat den Vorteil, dass das Profil des damit zu generierenden Magnetfelds besonders gleichmäßig und vorhersehbar fokussierend ist.

Gemäß einer Ausführungsform umfassen die mindestens zwei Elemente mindestens ein Abschirmelement, mindestens ein ferromagnetisches Einlageelement und/oder mindestens eine Graphitplatte. Derartige Elemente haben im Zusammenwirken mit einem oder mehreren magnetischen Elementen - in Abhängigkeit vom jeweiligen Abstand - einen großen Einfluss auf ein Feldprofil und damit auf das Produkt $\mathbf{B}(x,y,z)\nabla\mathbf{B}(x,y,z)$ bzw. $B(z)B'(z)$. Ferromagnetische Einlageelemente können beispielsweise einen Eisenring und/oder eine Eisenscheibe umfassen, die vorzugsweise innerhalb einer Spule eines Elektromagneten und koaxial mit der Spule in einem positiven Abstand voneinander angeordnet werden können; der Abstand kann z.B. in einem Bereich von 0,5 cm bis 2 cm liegen und vorzugsweise veränderlich sein. Damit kann der Wert $|\mathbf{B}(x,y,z)\nabla\mathbf{B}(x,y,z)|$ bzw. $|B(z)B'(z)|$ im Bereich zwischen derartigen Einlageelementen mit geringem Aufwand erheblich gesteigert werden.

Das Generieren des äußeren Magnetfeldes kann insbesondere mit zwei, drei oder mehr Spulen jeweiliger Elektromagneten erfolgen. Die Spulen sind dabei vorzugsweise koaxial angeordnet und in Richtung einer gemeinsamen Achse relativ zueinander beweglich (insbesondere axial verschieblich). Mindestens eine oder mindestens zwei der Spulen können vorzugsweise supraleitend sein. In axialer Richtung können die Spulen voneinander verschiedene Ausdehnungen haben. Bevorzugt ist eine Ausführungsform, bei der eine erste Spule (als ein erstes der Elemente) um eine zweite Spule (als zweites der Elemente) herum angeordnet ist. Die erste Spule kann dabei in axialer Richtung eine größere oder eine kleinere Ausdehnung haben als die zweite Spule.

Vorteilhaft ist eine Ausführungsform, bei der die relativ zueinander beweglichen Elemente zwei koaxial angeordnete Spulen von Elektromagneten umfassen, von denen eine erste um die zweite herum angeordnet ist, und wobei die relativ zueinander beweglichen Elemente zudem eine dritte, mit den anderen beiden ebenfalls koaxial angeordnete Spule eines Elektromagneten umfassen. Die dritte Spule ist dabei vorzugsweise in axialer Richtung versetzt zur zweiten Spule angeordnet und in axialer Richtung verschieblich. Ein durch eine der Spulen (vorzugsweise die dritte Spule) generiertes bzw. generierbares Magnetfeld ist dabei vorteilhafterweise einem durch die jeweils anderen Spulen generierten bzw. generierbaren (im Wesentlichen rotationssymmetrischen) Magnetfeld entgegen gerichtet. Dadurch kann ein großer Wert $|B(z)B'(z)|$ erzielt werden. Insbesondere kann ein Abstand der Spulen in axialer Richtung voneinander vorzugsweise so gewählt und eingestellt werden, dass der Wert für $|B(z)B'(z)|$ und ein vorteilhafter Stabilitätsbereich für ein jeweiliges Objekt und/oder ein festgelegter Wert oder Wertebereich einer zu erzeugenden Kraft erreicht wird.

Geeignete Werte für $\mathbf{B}(x,y,z)\nabla\mathbf{B}(x,y,z)$ bzw. für $B(z)B'(z)$ können vorzugsweise anwendungsabhängig durch eine geeignete Positionierung der mindestens zwei Elemente gewählt werden.

Eine vorteilhafte Ausführungsvariante des beschriebenen Verfahrens umfasst ein Ändern einer Position mindestens zweier relativ zueinander beweglicher Elemente einer verwendeten Magneteinrichtung relativ zueinander (beispielsweise ein Ändern eines Abstandes der Elemente voneinander). Insbesondere kann das Objekt ein erstes Objekt sein, und das Verfahren kann weiter ein Simulieren einer auf ein zweites, vom ersten Objekt verschiedenes Objekt wirkenden Schwerkraft im Weltall umfassen. Ein Ändern der Position der beweglichen Elemente relativ zueinander kann dabei beispielsweise unter Berücksichtigung des Materials, der Form und/oder mindestens einer Abmessung des zweiten Objekts erfolgen. Insbesondere kann es ein Herauslesen mindestens eines für das zweite Objekt geeigneten Wertes für einen Abstand der Elemente voneinander aus einer Tabelle oder Datenbank umfassen, in der vorzugsweise mehreren Materialien, Formen und/oder Abmessungen jeweils mindestens einem geeigneten Abstande zugeordnet sind, sowie ein Einstellen des Abstandes entsprechend dem herausgelesenen Wert.

Gemäß einem speziellen vorteilhaften Ausführungsbeispiel der beschriebenen Vorrichtung, die in mindestens einem Teilbereich ein im Wesentlichen rotationssymmetrisches Magnetfeld generiert, gilt für mindestens eine erste Positionierung der mindestens zwei Elemente relativ zueinander in mindestens einem Teilbereich eines von der Magneteinrichtung generierbaren Magnetfeldes (ggf. bei geeigneter angelegter Spannung) $B(z)B'(z) \leq -100$ T$^2$/m, bevorzugter $B(z)B'(z) \leq -450$ T$^2$/m, noch bevorzugter $B(z)B'(z) \leq -1500$ T$^2$/m. Insbesondere bei einer Verwendung auf der Erde erlauben derartige Werte im allgemeinen das Bewirken eines diamagnetischen Schwebens auch für biologische Stoffe, lebendes Gewebe und Flüssigkeiten.

Ein breites Spektrum an einzustellenden Werten für $B(z)B'(z)$ bedeutet dabei eine hinsichtlich der verschiedenen Objekte besonders flexibel einsetzbare Vorrichtung. Gemäß einer speziellen exemplarischen vorteilhaften Variante einer Vorrichtung, die ein in mindestens einem Teilbereich im Wesentlichen rotationssymmetrisches Magnetfeld generiert, gilt für mindestens eine zweite Positionierung der mindestens zwei Elemente relativ zueinander (und ggf. für eine zweite geeignete angelegte Spannung) in mindestens einem Teilbereich eines von der Magneteinrichtung generierbaren Magnetfeldes $-250$ T$^2$/m $\leq B(z)B'(z)$, bevorzugter $-100$ T$^2$/m $\leq B(z)B'(z)$, noch bevorzugter $0 \leq B(z)B'(z)$ gilt. Die zweite Positionierung kann dabei von der ersten verschieden sein oder - im Falle einer geänderten angelegten Spannung - mit ihr übereinstimmen.

Die Vorrichtung kann insbesondere in eine Teststrecke eingebettet sein, die weitere Stationen umfassen kann, z.B. zum Durchführen weiterer Versuche.

Dazu kann die Vorrichtung eine Versuchskammer umfassen, die im Zentrum eines von der Magneteinrichtung generierbaren Magnetfelds angeordnet sein kann und in die bzw. aus der das (z.B. diamagnetische) Objekt manuell oder automatisch (z.B. mit Hilfe eines Gas- oder Flüssigkeitsstroms) befördert werden kann.

Gemäß einer bevorzugten Variante umfasst die Vorrichtung mindestens eine Kühlvorrichtung. Besonders vorteilhaft ist eine Variante, die zudem eine Einrichtung zur Kontrolle einer Temperatur der Magneteinrichtung und/oder von deren Umgebung umfasst, mit der die Kühlvorrichtung vorzugsweise geregelt werden kann.

Das beschriebene Verfahren kann analog in einer vorteilhaften Variante ein Kühlen umfassen, vorzugsweise auch noch ein Kontrollieren einer Temperatur der Magneteinrichtung und/oder ihrer Umgebung, sowie vorzugsweise ein Regeln der Temperatur.

Eine solche, eine Kühlvorrichtung bzw. Kühlung aufweisende Variante ermöglicht ein Generieren eines besonders starken magnetischen Feldes bzw. besonders großer Werte für das Produkt $B(z)B'(z)$, so dass z.B. Objekte mit betragsmäßig kleiner magnetischen Suszeptibilität (und/oder großer Masse) zum Schweben gebracht werden können bzw. im Sinne einer simulierten Schwerkraft im Weltall auf gewünschte Werte beschleunigt werden können. Zudem kann die Kühlung schädliche Einflüsse von Hitze auf das jeweilige Objekt verhindern oder zumindest vermindern.

Ein Raumfahrzeug bzw. eine Raumstation kann eine Vorrichtung gemäß einer der in dieser Schrift offenbarten Varianten umfassen. Insbesondere vorteilhaft ist eine Ausführungsvariante, bei der die umfasste Vorrichtung zum Erzeugen von auf ein Objekt wirkender Kraft eine Kühlvorrichtung wie oben genannt umfasst, wobei die Kühlvorrichtung vorzugsweise eine Kältezufuhr von einer Außenumgebung des Raumfahrzeugs bzw. der Raumstation zur Magneteinrichtung aufweist. Damit kann effizient die Kälte des Weltalls zum Kühlen verwendet werden.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:

Figur 1:     eine exemplarische Teststrecke mit einer Vorrichtung zum Simulieren von Schwerkraft;

Figur 2:     eine Vorrichtung zum Erzeugen einer auf ein Objekt wirkenden Kraft gemäß einer ersten exemplarischen Ausführungsform, die ein erfindungsgemäßer Tank umfassen kann;

Figur 3:     eine Vorrichtung zum Erzeugen einer auf ein Objekt wirkenden Kraft gemäß einer zweiten exemplarischen Ausführungsform, die ein erfindungsgemäßer Tank umfassen kann; und

Figur 4a, 4b:     vereinfachte Ansichten einer Vorrichtung zum Erzeugen einer auf ein Objekt wirkenden Kraft.

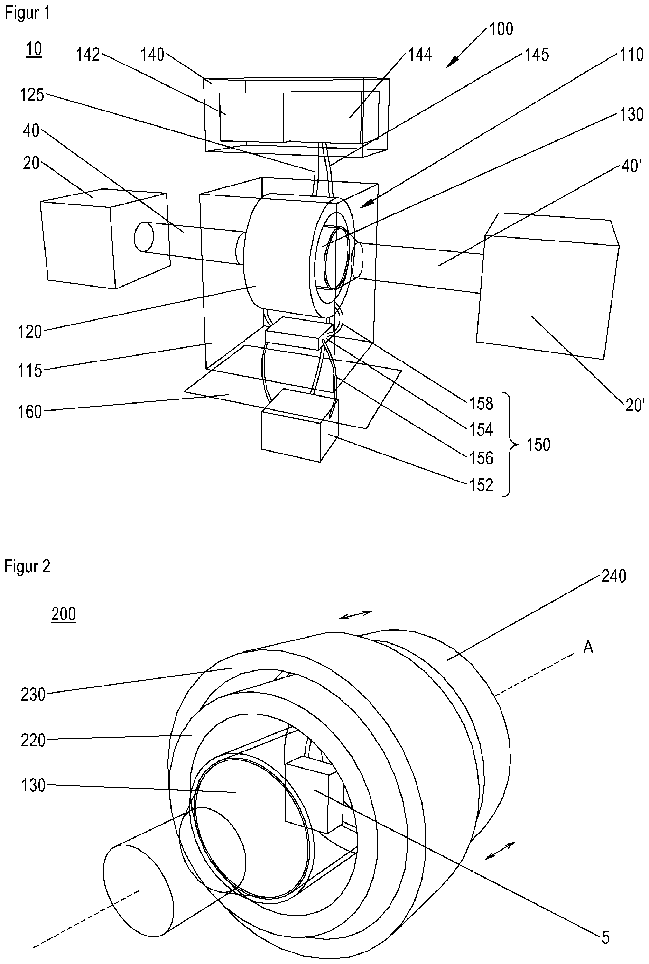

Die Figur 1 zeigt (als funktionales Diagramm vereinfacht) einen Ausschnitt einer Teststrecke 10, die dazu eingerichtet ist, in einem Raumfahrzeug oder einer Raumstation zum Durchführen von Versuchen verwendet zu werden. Die Teststrecke umfasst schematisch dargestellte Versuchsstationen 20, 20', sowie - zwischen diesen Versuchsstationen 20, 20' angeordnet - eine Vorrichtung 100 zum Simulieren von Schwerkraft; ein erfindungsgemäßer Tank kann insbesondere eine solche Ausführungsform einer Vorrichtung 100 umfassen.

Die Versuchsstationen 20, 20' sind vorliegend über eine Objektleitung 40 bzw. 40' mit der Vorrichtung 100 (als weiterer Station) verbunden; durch die jeweilige Objektleitung, die im dargestellten Beispiel in Form eines Rohrs realisiert ist, kann (z.B. mit Hilfe eines Gas- und/oder Flüssigkeitsstroms) ein Objekt transportiert und somit von Station zu Station weitergeleitet werden, wo es jeweils untersucht oder behandelt werden kann.

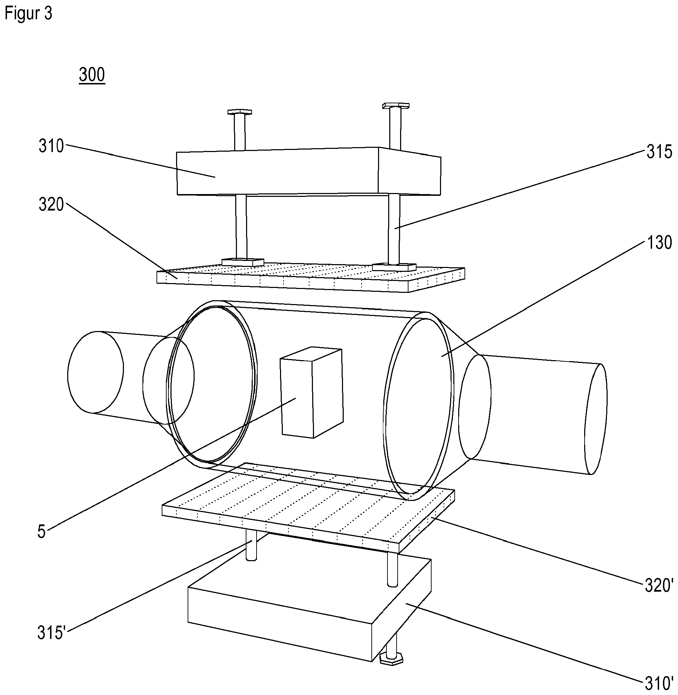

Die Vorrichtung 100 umfasst eine Magneteinrichtung 110, die im gezeigten Beispiel eine einfache Spule 120 als Elektromagneten umfasst; alternativ oder zusätzlich könnte die Vorrichtung beispielsweise mindestens eine koaxial zur gezeigten Spule angeordnete weitere Spule, mindestens einen Ferromagneten und/oder mindestens einen Quadrupolmagneten umfassen. Insbesondere könnte die Vorrichtung 100 anstelle der Spule 120 die in der Figur 2 gezeigte Magneteinrichtung mit den Spulen 220, 230 und 240 oder die in Figur 3 dargestellte Magneteinrichtung mit den beweglichen Magnete 310, 310' und Graphitplatten 320, 320' umfassen.

Im magnetischen Zentrum der Magneteinrichtung 110 (hier im Innern der Spule 120) ist eine Versuchskammer 130 angeordnet, in die hinein bzw. aus der heraus an die Objektleitung 40, 40' führt. Im Innern der Versuchskammer 130 kann mit Hilfe der Magneteinrichtung eine Schwerkraft auf ein Objekt in der Versuchskammer simuliert werden.

Die in der Figur 1 gezeigte Vorrichtung 100 umfasst ferner eine in einer Umgebung der Magneteinrichtung 110 angeordneten, in der Figur schematisch dargestellten Abschirmung 115 für elektromagnetische Strahlung. Diese dient dazu zu verhindern, dass die starke magnetische Strahlung der Magneteinrichtung in andere Subsysteme der Teststrecke oder eines Raumfahrzeugs bzw. einer Raumstation dringt, in dem bzw. der die Teststrecke 10 angeordnet sein kann, und diese Subsysteme beeinflusst.

Die Spule 120 ist über mindestens ein Kabel 125 an eine Energiequelle 142 und eine Steuerungskontrollvorrichtung 144 angeschlossen, die im gezeigten Beispiel zusammen in einer Versorgungs- und Steuerungseinrichtung 140 enthalten sind; eine solche Versorgungs- und Steuerungseinrichtung 140 kann insbesondere einen Datenspeicher umfassen, in dem Vergleichswerte abgelegt sein können, beispielsweise zum Regeln einer Temperatur und/oder zum automatischen Einstellen einer anzulegenden Spannung. Sofern die Teststrecke 10 in einem Raumfahrzeug oder einer Raumstation angeordnet ist, kann die Energiequelle 142 an dessen bzw. deren Energiequelle angeschlossen sein (nicht dargestellt). Vorzugsweise ist die Energiequelle einstellbar, insbesondere weist sie vorteilhafterweise eine Möglichkeit zur manuellen und/oder automatisierten Einstellung einer Versorgungsspannung für den Elektromagneten 120 auf. In Ausführungsformen, bei denen die Magneteinrichtung neben dem gezeigten Elektromagneten 120 als erstem Element ein (nicht gezeigtes) zweites Element umfasst, das relativ zum Elektromagneten beweglich ist, kann die Versorgungs- und Steuerungseinrichtung 140 vorzugsweise eine Bewegungsvorrichtung zum automatischen oder manuellen Bewegen der Elemente relativ zueinander umfassen; damit kann insbesondere die Vorrichtung 100 geeignet an gewünschte Bedingungen und/oder jeweilige Objekte mit ihren Eigenschaften angepasst werden.

Über mindestens ein weiteres Kabel 145 ist die in der Figur 1 dargestellte Versorgungs- und Steuereinrichtung 140 mit einer externen Temperaturkontrollvorrichtung 152 verbunden, die außerhalb einer (schematisch begrenzt dargestellten) Außenwand 160 z.B. in einer Außenumgebung eines Raumfahrzeugs bzw. einer Raumstation angeordnet ist und zusammen mit einer inneren Temperaturkontrollvorrichtung 154 Teil einer Kühlvorrichtung 150 ist. Die externe Temperaturkontrollvorrichtung 152 ist vorzugsweise dazu eingerichtet, die Temperatur der Außenumgebung aufzunehmen; über Temperaturleitungen 156 kann die Temperatur zur inneren Temperaturkontrollvorrichtung 154 und von dort über Temperaturleitungen 158 zum Elektromagneten 120 geleitet werden, der damit schnell und effizient gekühlt werden kann. Die innere Temperaturkontrollvorrichtung 154 umfasst vorzugsweise eine Messvorrichtung zum Erfassen der Temperatur des Elektromagneten, und die jeweils erfasste Temperatur wird vorzugsweise an die Steuerungskontrollvorrichtung 144 übermittelt, die gemäß einer vorteilhaften Ausführungsform mit den so erhaltenen Daten (z.B. nach einem Vergleich mit Kontrolldaten aus einem Datenspeicher) die Kühlung durch die Kühlvorrichtung 150 regelt.

In Figur 2 ist ein Beispiel einer Vorrichtung 200 zum Erzeugen einer auf ein Objekt 5 wirkenden Kraft dargestellt; ein erfindungsgemäßer Tank kann insbesondere ein solches Ausführungsbeispiel einer Vorrichtung umfassen. In der dargestellten Verwendung der Vorrichtung 200 ist das Objekt 5 im gezeigten Beispiel innerhalb einer Versuchskammer 130 angeordnet, die analog zum in Figur 1 gezeigten Beispiel an Objektleitungen 40, 40' angeschlossen werden oder sein kann. Bei Verwendung im Weltall kann die mit der Vorrichtung zu erzeugende Kraft beispielsweise eine auf das Objekt wirkende Schwerkraft simulieren, bei Verwendung auf der Erde kann die Kraft der Schwerkraft entgegenwirken und so ein Schweben des Objekts 5 realisiert werden; in diesem Fall ist die Vorrichtung vorzugsweise so auszurichten, dass die zentrale Achse A der gezeigten koaxialen Spulen 220, 230, 240 (die relativ zueinander bewegliche Elemente einer Magneteinrichtung sind) vertikal verläuft.

Die Spulen 220, 230, 240 sind vorzugsweise an mindestens eine Energiequelle anzuschließen oder bereits angeschlossen, deren Versorgungsspannung vorteilhafterweise einstellbar ist; bevorzugt ist eine Ausführungsform, bei der die jeweilige Versorgungsspannung für die einzelnen Spulen 220, 230, 240 individuell einstellbar ist.

Mittels der anzulegenden Versorgungsspannung kann vorzugsweise in der Spule 240 ein Stromfluss eingestellt werden, der einem Stromfluss in den Spulen 220 und 230 entgegenläuft. In den zylindrischen Spulen 220 und 230 (von denen die Spule 230 eine kleinere axiale Erstreckung aufweist als die Spule 220, um die herum die Spule 230 verläuft) kann damit vorzugsweise ein erstes äußeres Magnetfeld generiert werden, dem ein zweites Magnetfeld, das mit der in axialer Richtung zu den Spulen 220, 230 versetzt angeordneten, ebenfalls zylindrisch ausgebildeten Spule 240 erzeugt werden kann, entgegengesetzt gerichtet ist. Das aus der Überlagerung von erstem und zweitem Magnetfeld resultierende äußere Magnetfeld induziert in dem Objekt 5 ein magnetisches Moment. Aus diesem magnetischen Moment resultiert die genannte, auf das Objekt wirkende Kraft.

Wie in der Figur 2 durch Doppelpfeile angedeutet, ist die Spule 240 dabei vorzugsweise relativ zu den Spulen 220, 230 in axialer Richtung beweglich; alternativ oder zusätzlich können auch die umeinander angeordneten Spulen 220, 230 relativ zueinander beweglich sein.

Damit kann die besagte Überlagerung der Magnetfelder manipuliert und insbesondere für das resultierende äußere Magnetfeld der Verlauf (und die Ableitung) der Funktion $B(z)$ in Richtung $z$ entlang der zentralen Achse A geändert werden; dabei ist $B(z)$ jeweils der Betrag der magnetischen Flussdichte des aus den Überlagerungen der einzelnen Magnetfelder resultierenden äußeren Magnetfelds.

Wie oben beschrieben können so die auf das Objekt 5 wirkende Kraft und ein geeigneter Stabilitätsbereich (in dem das Objekt 5 bei einer Verwendung auf der Erde vorzugsweise schweben kann) eingestellt werden. Gemäß einem speziellen Ausführungsbeispiel kann zwischen den Spulen 220 und 240 ein axialer Abstand bis zu einem Durchmesser der inneren Spule 220 oder weiter eingestellt werden.

Die Bewegung der Spulen relativ zueinander kann manuell und/oder automatisiert möglich sein; insbesondere kann die Vorrichtung eine (nicht gezeigte) Bewegungseinrichtung (z.B. einen Elektromotor) umfassen.

In Figur 3 ist exemplarisch eine weitere Ausführungsform einer Vorrichtung 300 zum Erzeugen einer auf ein Objekt 5 wirkenden Kraft gezeigt, die ein erfindungsgemäßer Tank umfassen kann. In der dargestellten Verwendung der Vorrichtung 200 ist das Objekt 5 wiederum innerhalb einer Versuchskammer 130 angeordnet, die analog zum in Figur 1 gezeigten Beispiel an Objektleitungen 40, 40' angeschlossen werden oder sein kann.

Die Vorrichtung 300 umfasst eine Magneteinrichtung, die zwei Permanentmagneten 310, 310' mit einander zugewandten Flächen umfasst. Zwischen den einander zugewandten Flächen sind zwei Graphitplatten 320, 320' angeordnet, die ebenfalls einander zugewandte Oberflächen aufweisen; zwischen diesen Oberflächen ist die Versuchskammer 130. Die Graphitplatten dienen dabei einer gezielten Beeinflussung des (das Objekt 5 umgebenden und daher "äußeren") Magnetfeldes.

Die einander zugewandten Oberflächen der Permanentmagneten 310, 310' und der Graphitplatten 320, 320' liegen auf parallelen Ebenen und sind mittels Schienen 315, 315' relativ zueinander beweglich. So kann der Abstand zwischen den Permanentmagneten 310 und 310', der Abstand zwischen den Graphitplatten 320, 320' sowie die Abstände zwischen Permanentmagneten und Graphitplatten geändert werden; in der in dieser Schrift verwendeten Terminologie sind also bei der in der Figur 3 dargestellten Ausführungsform die Permanentmagneten und die Graphitplatten die relativ zueinander beweglichen Elemente. Damit kann das Magnetfeld und damit das Produkt $B(z)B'(z)$ für das jeweilige Objekt (mit den ihm eigenen Eigenschaften) optimiert werden. Die Bewegung der Elemente relativ zueinander kann manuell und/oder automatisiert möglich sein; insbesondere kann die Vorrichtung eine (nicht gezeigte) Bewegungseinrichtung (z.B. einen Elektromotor) umfassen.

In alternativen Ausführungsformen weist die Vorrichtung als relativ zueinander bewegliche Elemente lediglich genau einen Permanentmagneten und/oder genau eine Graphitplatte auf.

Bei einer Verwendung auf der Erde sind die Permanentmagnete(n) und die Graphitplatte(n) jeweils vorzugsweise (wie dargestellt) in vertikaler Richtung übereinander angeordnet.

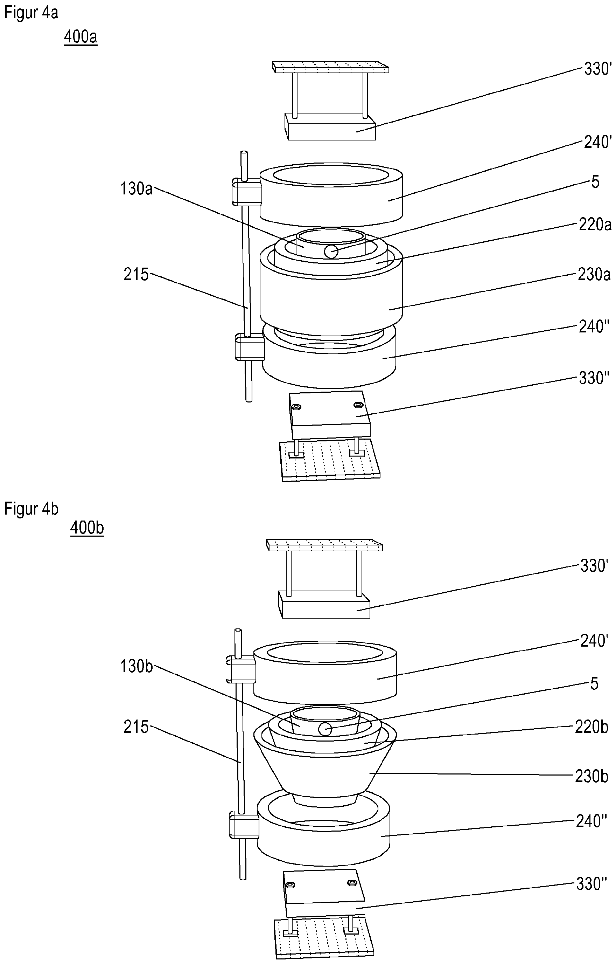

Die Figuren 4a und 4b zeigen vereinfachte Ansichten zweier Ausführungsformen je einer Vorrichtung 400a bzw. 400b, die ein erfindungsgemäßer Tank jeweils umfassen kann: Jede dieser Vorrichtungen umfasst zwei koaxial ineinander angeordnete Spulen von Elektromagneten, die vorliegend eine jeweilige Versuchskammer umlaufen: Bei der in der Figur 4a gezeigten Vorrichtung 400a sind diese die Versuchskammer 130a umlaufenden Spulen 220a, 230a wie auch eine Außenwand der Versuchskammer 130a im Wesentlichen entlang der Mantelfläche eines jeweiligen Kreiszylinders ausgebildet, wohingegen die entsprechenden Spulen 220b, 230b und die Außenwand der Versuchskammer 130b im in der Figur 4b gezeigten Ausführungsbeispiel 400b im Wesentlichen entlang der Mantelfläche eines jeweiligen Kreiskegels geformt sind. Die jeweilige gemeinsame zentrale Achse (Rotations-Symmetrieachse) ist in den Figuren 4a, 4b nicht eingezeichnet. Die jeweils innen angeordnete Spule 220a bzw. 220b weist (bezüglich dieser zentralen Achse) eine größere axiale Erstreckung auf als die jeweils außen liegende Spule 230a bzw. 230b.

In (wiederum bezüglich der zentralen Achse) axialer Richtung versetzt angeordnet sind in den gezeigten Ausführungsbeispielen der Figuren 4a, 4b an jeder Seite je eine weitere Spule 240', 240", deren Abstand voneinander mit Hilfe von Schienen 215 verstellbar ist. An der in axialer Richtung nach außen hin weisenden Seite jeder der Spulen 240', 240" ist jeweils ein Permanentmagnet 330', 330" angeordnet. Die Permanentmagneten 330', 330" sind vorzugsweise ebenfalls relativ zueinander in axialer Richtung beweglich (nicht dargestellt), ihr Abstand voneinander (und damit der von ihnen begrenzte, die Spulen und die Versuchskammer umfassende Raum) ist also einstellbar.

Die Spulen 220a, 230a, 240' und 240" (bzw. 220b, 230b, 240', 240") sind vorzugsweise an mindestens eine (nicht dargestellte) Energiequelle anzuschließen oder bereits angeschlossen, deren Versorgungsspannung vorteilhafterweise einstellbar ist; vorteilhaft ist eine Ausführungsform, bei der die jeweilige Versorgungsspannung für die einzelnen Spulen individuell einstellbar ist.

Mittels der anzulegenden Versorgungsspannung kann vorzugsweise in den Spulen 240', 240" jeweils ein Stromfluss eingestellt werden, der einem Stromfluss in den Spulen 220a und 230a (bzw. 220b, 230b) entgegenläuft.

Das aus der Überlagerung der Magnetfelder der Spulen 220a, 230a, 240' und 240" (bzw. 220b, 230b, 240', 240") und der Permanentmagneten resultierende (äußere) Magnetfeld induziert in dem Objekt 5 ein magnetisches Moment. Aus diesem magnetischen Moment resultiert die genannte, auf das Objekt 5 wirkende Kraft. Mittels einer Einstellung der verschiedenen Abstände und/oder Versorgungsspannung(en) kann die Kraft vorzugsweise passend zu dem Objekt (beispielsweise zu seinem Material, seiner Form und/oder seinen Abmessungen) geeignet eingerichtet werden. Bei Verwendung auf der Erde kann das Objekt 5 auf diese Weise beispielsweise zum Schweben gebracht werden. Bei einem erfindungsgemäßen Tank eines Raumfahrzeugs im Weltall kann durch das Erzeugen der Kraft eine auf im Tank enthaltenem Treibstoff (als das Objekt 5) wirkende Schwerkraft (einer einstellbaren Stärke) simuliert werden.

Ein in dieser Schrift offenbartes Verfahren dient einem Simulieren einer auf ein Objekt 5 wirkenden Schwerkraft im Weltall. Es umfasst ein Generieren eines äußeren Magnetfelds in einer Umgebung des Objekts. Damit wird ein magnetisches Moment in dem Objekt induziert. Eine in dieser Schrift offenbarte Vorrichtung (200, 300) dient einem Erzeugen einer auf ein Objekt 5 wirkenden Kraft. Die Vorrichtung umfasst eine Magneteinrichtung zum Generieren eines äußeren Magnetfeldes in einer Umgebung des Objektes und damit zum Induzieren eines magnetischen Moments in dem Objekt. Die Magneteinrichtung weist mindestens zwei Elemente 220, 230, 240, 310, 310', 320, 320' auf, die zum Einstellen des äußeren Magnetfeldes relativ zueinander beweglich sind. Der Schutzumfang bestimmt sich aus dem Wortlaut der Ansprüche.

Bezugszeichen

| | |
|---|---|
| 5 | Objekt |
| 10 | Teststrecke |
| 20, 20' | Versuchsstation |
| 40, 40' | Objektleitung |
| | |
| 100 | Vorrichtung zum Simulieren von Schwerkraft |

| 110 | Magneteinrichtung |
|---|---|
| 115 | Abschirmung |
| 120 | Spule |
| 125 | Kabel |
| 130, 130a, 130b | Versuchskammer |
| 140 | Versorgungs- und Steuerungseinrichtung |
| 142 | Energiequelle |
| 144 | Steuerungskontrollvorrichtung |
| 145 | Kabel |
| 150 | Kühlvorrichtung |
| 152 | innere Temperaturkontrollvorrichtung |
| 154 | äußere Temperaturkontrollvorrichtung |
| 156, 158 | Temperaturleitungen |
| 160 | Außenwand |

| 200, 300, 400a, 400b | Vorrichtung zum Erzeugen einer auf ein Objekt wirkenden Kraft |
|---|---|
| 215 | Schienen |
| 220, 220a, 220b, 230, 230a, 230b, 240, 240', 240" | Spulen |
| 310, 310' | Permanentmagnet |
| 315, 315' | Schienen |
| 320, 320' | Graphitplatte |
| 330', 330" | Permanentmagnet |

A     zentrale Achse

**Patentansprüche**

1. Tank eines Weltraumfahrzeugs, der zum Erzeugen einer auf einen im Tank enthaltenen Treibstoff wirkenden Kraft eine Vorrichtung (200, 300) umfasst, die eine Magneteinrichtung zum Generieren eines äußeren Magnetfeldes und damit zum Induzieren eines magnetischen Moments in dem Treibstoff umfasst,
wobei die Magneteinrichtung mindestens zwei Elemente (220, 220a, 220b, 230, 230a, 230b, 240, 240', 240", 310, 310', 320, 320', 330', 330") aufweist, die zum Einstellen des äußeren Magnetfeldes relativ zueinander beweglich sind.

2. Tank gemäß Anspruch 1, wobei die mindestens zwei Elemente umfassen:

   mindestens zwei oder mindestens drei koaxial angeordnete Spulen (220, 220a, 220b, 230, 230a, 230b, 240, 240', 240") von Elektromagneten;
   mindestens eine supraleitende Spule;
   mindestens einen Permanentmagneten (310, 310', 330', 330");
   mindestens ein Abschirmelement;
   mindestens ein ferromagnetisches Einlageelement;
   mindestens eine Graphitplatte (320, 320'); und/oder
   mindestens einen wassergekühlten Bittermagneten.

3. Tank gemäß einem der Ansprüche 1 oder 2, wobei das von der Magneteinrichtung generierbare Magnetfeld in mindestens einem Teilbereich im Wesentlichen rotationssymmetrisch bzw. homogen ist.

4. Tank gemäß Anspruch 3,

   wobei für mindestens eine erste Positionierung der mindestens zwei Elemente (220, 220a, 220b, 230, 230a, 230b, 240, 240', 240", 310, 310', 320, 320', 330', 330") relativ zueinander in mindestens einem Teilbereich eines von der Magneteinrichtung generierbaren Magnetfeldes gilt $B(z)B'(z) \leq$ -150 T$^2$/m, bevorzugter $B(z)B'(z) \leq$ -450 T$^2$/m,
   noch bevorzugter $B(z)B'(z) \leq$ -1500 T$^2$/m,
   und/oder wobei für mindestens eine zweite Positionierung der mindestens zwei Elemente (220, 220a, 220b, 230, 230a, 230b, 240, 240', 240", 310, 310', 320, 320', 330', 330") relativ zueinander in mindestens einem Teilbereich eines von der Magneteinrichtung generierbaren Magnetfeldes gilt -250 T$^2$/m $\leq B(z)B'(z)$, bevorzugter

-100 T$^2$/m $\leq B(z)B'(z)$, noch bevorzugter $0 \leq B(z)B'(z)$;
dabei ist entlang einer zentralen Achse (A) des Magnetfeldes jeweils $B(z)$ der Betrag der magnetischen Flussdichte im Punkt $z$, und $B'(z)$ ist die zugehörige erste Ableitung von $B$.

5. Tank gemäß einem Ansprüche 1 bis 4, wobei die Vorrichtung zudem mindestens eine Kühlvorrichtung (150) umfasst.

## Claims

1. Tank of a space vehicle, which comprises a device (200, 300) for the generation of a force acting on a propellant contained in the tank, which device comprises a magnetic device for the generation of an external magnetic field, and thereby for the induction of a magnetic moment in the propellant, wherein
the magnetic device has at least two elements (220, 220a, 220b, 230, 230a, 230b, 240, 240', 240", 310, 310', 320, 320', 330', 330"), which can be moved relative to one another so as to adjust the external magnetic field.

2. Tank in accordance with Claim 1, wherein
the at least two elements comprise:

at least two or at least three coaxially-arranged coils (220, 220a, 220b, 230, 230a, 230b, 240, 240', 240") of electromagnets;
at least one superconducting coil;
at least one permanent magnet (310, 310', 330', 330");
at least one shielding element;
at least one ferromagnetic insert element;
at least one graphite plate (320, 320');
and/or at least one water-cooled bitter magnet.

3. Tank in accordance with one of the Claims 1 or 2, wherein
the magnetic field that can be generated by the magnetic device is essentially rotationally symmetrical, or homogeneous, in at least one sub-region.

4. Tank in accordance with Claim 3, wherein

for at least a first positioning of the at least two elements (220, 220a, 220b, 230, 230a, 230b, 240, 240', 240", 310, 310', 320, 320', 330', 330") relative to one another in at least one sub-region of a magnetic field that can be generated by the magnetic device, the following applies: $B(z)B'(z) \leq$ -150 T$^2$/m, more preferably $B(z)B'(z) \leq$ -450 T$^2$/m, even more preferably $B(z)B'(z) \leq$ -1,500 T$^2$/m, and/or wherein
for at least a second positioning of the at least two elements (220, 220a, 220b, 230, 230a, 230b, 240, 240', 240", 310, 310', 320, 320', 330', 330") relative to each other in at least one sub-region of a magnetic field that can be generated by the magnetic device, the following applies: -250 T$^2$/m $\leq B(z)B'(z)$, more preferably -100 T$^2$/m $\leq B(z)B'(z)$, even more preferably $0 \leq B(z)B'(z)$;
where in each case $B(z)$ is the magnitude of the magnetic flux density at point $z$ along a central axis (A) of the magnetic field, and $B'(z)$ is the corresponding first derivative of $B$.

5. Tank in accordance with one of the Claims 1 to 4, wherein
the device also comprises at least one cooling device (150) .

## Revendications

1. Réservoir d'un véhicule spatial qui comprend un dispositif (200, 300) pour produire une force agissant sur du carburant contenu dans le réservoir qui comprend un équipement d'aimant pour générer un champ magnétique extérieur et pour induire avec cela un couple magnétique dans le carburant, dans lequel l'équipement d'aimant présente au moins deux éléments (220, 220a, 220b, 230, 230a, 230b, 240, 240', 240", 310, 310', 320, 320', 330', 330") qui sont mobiles l'un par rapport à l'autre pour régler le champ magnétique extérieur.

2. Réservoir selon la revendication 1, dans lequel les aux moins deux éléments comprennent :

au moins deux ou au moins trois bobines disposées coaxialement (220, 220a, 220b, 230, 230a, 230b, 240, 240', 240") d'électro-aimants ;
au moins une bobine supra-conductrice ;
au moins un aimant permanent (310, 310', 330', 330") ;
au moins un élément de blindage ;
un moins un élément d'insert ferromagnétique ;
au moins une plaque de graphite (320, 320') ; et/ou au moins un aimant « bitter » refroidi par eau.

3. Réservoir selon la revendication 1 ou 2, dans lequel le champ magnétique pouvant être généré par l'équipement d'aimant est essentiellement symétrique en rotation, respectivement homogène, dans au moins une zone partielle.

4. Réservoir selon la revendication 3, dans lequel pour au moins un premier positionnement des au moins deux éléments (220, 220a, 220b, 230, 230a, 230b, 240, 240', 240", 310, 310', 320, 320', 330, 330") l'un par rapport à l'autre dans au moins une zone partielle d'un champ magnétique pouvant être généré par l'équipement d'aimant, il vaut $B(z)B'(z) \leq$ -150 T$^2$/m, de manière plus préférée $B(z)B'(z) \leq$ -450 T$^2$/m, de manière encore plus préférée $B(z)B'(z) \leq$ -1500 T$^2$/m, et/ou dans lequel pour au moins un second positionnement des au moins deux éléments (220, 220a, 220b, 230, 230a, 230b, 240, 240', 240", 310, 310', 320, 320', 330, 330") l'un par rapport à l'autre dans au moins une zone partielle d'un champ magnétique pouvant être généré par l'équipement d'aimant, il vaut - 250 T$^2$/m $B(z)B'(z)$, de manière plus préférée - 100 T$^2$/m $B(z)B'(z)$, de manière encore plus préférée $0 \leq B(z)B'(z)$ ; dans lequel le long d'un axe central (A) du champ magnétique, $B(z)$ est respectivement la valeur absolue de l'induction magnétique au point $z$, et $B'(z)$ est la première dérivée de B qui en fait partie.

5. Réservoir selon l'une des revendications 1 à 4, dans lequel le dispositif comprend en outre au moins un dispositif de refroidissement (150).

Figur 1

Figur 2

Figur 3

Figur 4a

400a

330'

130a

240'

5

220a

215

230a

240''

330''

Figur 4b

400b

330'

240'

130b

5

220b

215

230b

240''

330''

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1079399 A

**In der Beschreibung aufgeführte Nicht-Patentliteratur**

- **M.V. BERRY ; A.K. GEIM.** Of flying frogs and levitrons. *Eur. J. Phys.,* 1997, vol. 18, 307-313